# EUROPEAN PATENT APPLICATION

(11) **EP 1 526 080 A2**
(43) Date of publication of application: **27.04.2005**
(21) Application number: 04256247.0
(22) Date of filing: 08.10.2004
(51) Int. Cl.: B65D 27/30, B65D 27/18, C09J 7/02

(54) **Temperature sensitive tape applied with radiation curable adhesive**

(30) Priority: 23.10.2003 US 514190; 15.09.2004 US 941788
(71) Applicant: SEALED AIR CORPORATION, Saddle Brook New Jersey 07663 (US)
(72) Inventor: Kannankeril, Charles P., North Caldwell, New Jersey 07006 (US); Arora, Atul, Piscataway, New Jersey 08854 (US); Kyle, David R., Moore, South Carolina 29369 (US); Moffitt, Ronald D., Chatham, Virginia 24531 (US)
(74) Representative: Price, Nigel John King

(57) **Abstract**

A tamper evident container includes a first portion (11); an opening capable of providing access to the interior of the tamper evident container; a second portion (12); an adhesive strip (14) adhered to the first (11) or second portion (12); and a temperature sensitive tape (17); wherein at least one of the first portion (11), second portion (12), and temperature sensitive tape (17) includes a radiation cured adhesive (19); and wherein the temperature sensitive tape (17) is adhered to the first or second portion (11,12) by means of the radiation cured adhesive (19). A method is also disclosed.

## Description

### Field Of The Invention

The present invention relates to a container, such as a security envelope, to which a temperature sensitive tape is attached by a radiation curable adhesive.

### Background Of The Invention

It is known that banking establishments and the like use containers for transmitting valuables, for example specified sums of money, securities, cash in transit (CIT), etc. from one department to another. The system operated by such establishments is such that it is readily possible to ascertain whether a container has been stolen in transit. However it is ordinarily more difficult to ascertain whether the container containing the valuables has been opened in transit and then resealed after some of the contents have been removed. In order to overcome this problem, tamper evident containers have been provided wherein an attempt to gain access to the interior of the tamper evident container becomes visibly apparent.

Typically, the two primary walls of such tamper evident containers are formed of a single sheet material folded to form a continuous bottom portion, and sealed along its lateral edges, to form an envelope with an opening which gives access to the interior of the tamper evident container. Alternatively, two sheets of material can be sealed together at their congruent bottom and side edges to form an envelope having two primary walls, and having an opening. The tamper evident containers include a closure mechanism to provide the capability of closing the tamper evident container after an article, such as a bank note, cash, or other securities, has been inserted therein. This mechanism typically includes a strip of pressure sensitive adhesive, usually with a release tape adhered thereto to prevent premature adhesion of the adhesive strip to a portion of the tamper evident container or another object. The adhesive strip is typically located near the top or edge of one of the two primary walls or portions of the container.

In one embodiment, the tamper evident container (e.g. in the form of an envelope) is formed from a first sheet portion forming a first (usually front) wall or panel of the container, and a second sheet portion forming a second (usually back) wall or panel of the container, the second sheet portion being longer than the first sheet portion, and including an adhesive strip covered with a release liner or strip. A tamper evident device, which can be the adhesive strip itself, or a separate device, is also located on the interior surface of the second panel, or on the exterior surface of the first panel. The two panels form an opening therebetween. In practice, the product to be packaged (e.g. cash or securities) is placed in the container, the release liner is removed from the adhesive strip, and the extended upper portion of the second wall is folded over and pressed into contact with the exterior wall of the first sheet to activate the tamper evident seal. This provides a closed container with a tamper evident seal.

In another embodiment, the tamper evident container (e.g. in the form of an envelope) has two panels formed from a first and a second sheet portion respectively as described above, but in which both sheets are of substantially the same length. The opening in the container is essentially the open mouth formed at one end of the container between the upper edges of the first and second panels. An adhesive strip is located on the interior side of one of the panels. A tamper evident device, which can be the adhesive strip itself, or a separate device, is also located on the interior surface of one of the panels. In practice, the product to be packaged is placed in the container. As above, a release liner will typically be removed from the adhesive panel. The panels are then pressed together to close the container, and provide a closed container with a tamper evident seal.

In a third embodiment, the two panels are of substantially equal length, but a break or opening in one of the panels provides initial access to the interior of the container. The opening can be as thin as a slot, or can form a more significant part of one panel or wall of the container. In this embodiment, the adhesive strip can be installed at any appropriate place on the container, acting as or in conjunction with a tamper evident device, and capable of sealing to another portion of the container so as to seal the container closed.

Closure is typically effected by means of a band of high-tack adhesive which is applied across the closure portion or the portion having the opening, for example from the molten state, from transfer tape, solvent cast or in the form of a discrete tape. The adhesive may be pressure sensitive adhesive, and suitable adhesives include thermoplastic hot melt adhesives, silicone adhesives, acrylic pressure sensitive adhesives, solvent cast adhesives, and the like.

Such adhesives are required to have high initial tack with respect to the surface of the sheet material and also to have high adhesive and cohesive strength. In order to provide a visible indication of any attempt to open the tamper evident container by separating the closure portion and the portion having the opening, the adhesive should be strong enough to cause stretching, tearing, or other permanent mechanical distortion of the portions upon attempted opening of the container. If desired, perforations or serrated edges may be provided in the closure portion to indicate tearing and emphasize the mechanical distortion. The adhesive can also be formulated to provide evidence of chemical attack.

With the exception of silicone adhesives, adhesives suitable for the closure of tamper evident containers have a softening temperature which is below the melting point of the closure portion and of the sheet material. The softening temperature is commonly in the range of between 50°C and 90°C. Accordingly, by the local application of heat, an unauthorized person can open and reseal the tamper evident container without any visible indication that the tamper evident container has been opened.

To discourage this practice, thermochromic inks have been used in tamper evident containers. These inks are formulated to develop a permanent, non-reversible, and visibly evident color change when the adhesive on the envelope is exposed to heating. In this way, if unauthorized access to a tamper evident container is attempted by means of local application of heat to an adhesive on the envelope, a color change in the ink makes this evident.

Although these systems provide a good visual indication of unauthorized tampering with the tamper evident container or other article, such systems tend to be expensive, requiring the extra step and cost associated with applying a thermochromic ink to a tape, or to a sheet portion of a container. An additional consideration is that the ink system should be compatible with the substrate onto which the ink is coated or otherwise applied.

It is therefore desirable to provide a relatively economic and effective alternative to conventional tapes and containers. The alternative should desirably not require printing a message, or other post processing, to make the container tamper evident.

It is known to use an ethylene/acrylic acid copolymer (EAA) in the form of a thin, narrow film strip, to function as a tape for a tamper evident container. This tape exhibits frangibility, i.e. physically distorts or breaks up relatively easily if the tape is tampered with. Unfortunately, a problem associated with the use of this material is that the same grades of EAA that exhibit frangibility when used in a tape, are also very difficult and expensive to process efficiently. Such EAA is typically very tacky and sticky.

Unfortunately, the conventional methods of adhering a temperature sensitive tape to a security envelope or like container are the use of heat sealing or the application of a hot melt adhesive to the tape and/or envelope. The heat and pressure of this conventional processes could damage or destroy a frangible tape while it is being applied to the container body. This damage can render the tape useless for its intended tamper evidence function.

The inventors have found that a radiation curable adhesive can be used to attach a temperature sensitive tape to a container, such as a security envelope.

### Summary Of The Invention

In a first aspect, a tamper evident container comprises a first portion; an opening capable of providing access to the interior of the tamper evident container; a second portion; an adhesive strip adhered to the first or second portion; and a temperature sensitive tape; wherein at least one of the first portion, second portion, and temperature sensitive tape comprises a radiation cured adhesive; and wherein the temperature sensitive tape adheres to the first or second portion by means of the radiation cured adhesive.

In a second aspect, a method of making a tamper evident container comprises providing a first portion, an opening capable of providing access to the interior of the tamper evident container, a second portion, an adhesive strip adhered to the first or second portion, and a temperature sensitive tape; applying a radiation curable adhesive to at least one of the first portion, second portion, and temperature sensitive tape; bringing the temperature sensitive tape in contact with the first or second portion; and curing the radiation curable adhesive such that the temperature sensitive tape adheres, by means of the radiation curable adhesive, to at least one of the first and second portions.

All compositional percentages used herein are presented on a "by weight" basis, unless designated otherwise.

### Definitions

"Container" herein refers to bags, pouches, envelopes, or other articles which can store a product.

"Mechanical evident" herein refers to a continuous or discontinuous layer or layers, coating, printing, or messaging that displays a visual change in color, shape, size, or pattern when stretched, torn, or otherwise distorted, or when an attempt is made to open a container which includes the mechanical evident layer.

"Message" herein refers to any alphabetic, numeric, or alphanumeric message, warning, or statement that communicates to the viewer that tampering has occurred or been attempted.

"Solvent evident" refers to a continuous or discontinuous layer, coating, printing, or messaging that displays a visual change in color, shape, size, or pattern when contacted with a solvent.

"Tape for a tamper evident container" herein refers to a discrete strip of material which can be manufactured and then, simultaneously or subsequently, can be adhered, by means of a radiation curable adhesive, to a larger panel or sheet that forms or will ultimately form a portion of a container. When the container is sealed, the tape will exhibit tamper evident properties.

"Temperature sensitive" herein refers to a tape which exhibits some type of physical distortion under at least one of the following conditions:
1) when heated to elevated temperatures (above 120°F) for a period of five seconds or more; or
2) when cooled to lower temperatures (below 10°F) for a period of five seconds or more.

"Thermochromic" herein refers to an ink that exhibits a permanent, non-reversible, and visibly evident color change when exposed to heat.

### Brief Description of the Drawings

A detailed description of preferred embodiments of the invention follows, with reference to the attached drawings, wherein:
FIG. 1 is a schematic cross sectional view of a tamper evident container in accordance with the present invention;
FIG. 2 is an enlarged schematic cross sectional view of a part of Figure 1, with the container closed;
FIG. 3 is a schematic cross sectional view of a tamper evident container in accordance with an alternative embodiment the present invention;
FIG. 4 is an enlarged schematic cross sectional view of a part of Figure 3, with the container closed;
FIG. 5 is a plan view of a tamper evident container of Figure 1; and
FIG. 6 is a plan view of a tamper evident container of Figure 3.

### Detailed Description Of The Invention

The present invention is directed to a tamper evident container which can show distortion or other destructive indications when the container is tampered with.

A radiation curable adhesive is applied in the fabrication of a tamper evident sealing mechanism or device for secure protection of valuables during transit.

Typically in the past, temperature sensitive tape has been attached to a security envelope by means of heat sealing or hot melt adhesives. However, when using a frangible material as the tape composition, such as the EAA described herein, heat sealing can destroy or disrupt the tamper evidence functionality of the tape. In the case of hot melt adhesives, these can loose their bond strength when subjected to freezing temperatures, and therefore can be easily tampered with.

It has now been found that radiation curable adhesives can be applied in-line during envelope manufacture, with relatively high production speeds compared with heat sealing, and result in stronger adhesion of tape to envelope, maintenance of the tamper evidence functionality of the frangible tape, and maintenance of package aesthetics. In one embodiment, radiation curable adhesives can be selected so that the frangible tape can not be removed from the envelope without significant distortion.

This invention enhances the benefit of using EAA as a frangible, tamper evident material in a tamper evident tape.

In practice, the EAA can be made into a tape, which can be applied to an envelope for use in tamper evident applications. A radiation curable adhesive, such as an adhesive curable by ultraviolet light, is coated, printed, or otherwise applied to one side of the EAA tape. Alternatively, the radiation curable adhesive is applied to a portion, typically a wall, of the tamper evident container to which the EAA tape will be attached. In still another embodiment, the radiation curable adhesive can be applied to both the tape, and the relevant portion of the container. The tape is then brought into contact with a portion of the container. Radiation such as ultraviolet light, or ionizing radiation such as electron beam radiation, is then applied to the radiation curable adhesive to cure the adhesive and thus adhere the tape to the relevant portion of the container.

### Radiation Curable Adhesives

Radiation curable adhesives useful in place of heat seals can be selected based on cationic, free radical, and hybrid chemistries. Radiation curable adhesives offer much faster production speeds than conventional heat seal processes. They can be used to construct a variety of adhesive junctions that can replace heat seals. Because radiation curable adhesives can be applied via traditional coating processes, the options for specific shapes or geometries are vast and allow patterns not possible with heat seals, in a fast, continuous, laminating and curing process.

Some advantages UV adhesives offer for bonding films include:
- Controllable bond strengths that can be moderate such as for tacking or tamper evident applications to very high with substrate destruction before bond failure. Bond strengths also can be controlled through formulation and UV dose from low to high bond strength.
- UV curable pressure sensitive adhesives are available with controlled tack and bond strength that allow easy removable, reclosable or permanent bonds along with improved properties such elevated temperature resistance not possible with thermoplastic type adhesives.

The radiation curable adhesive can be applied by flexographic, rotogravure, rotoscreen, ink jet, roll coating and other dispensing methods. This approach offers several advantages over the currently used heat sealing process that includes:
- Allowing complex multiple cushion patterns to be printed on wide web in any desired cushion pattern.
- The printing process would allow high throughput of >200 fpm.

The adhesive is required to rapidly form strong bonds to the film substrate. It is desirable that the adhesive systems have the following characteristics as shown in Table 1.

**Table 1**

| Desirable Adhesive Characteristic | UV Curable Adhesives |
|---|---|
| No/low volatile organic compounds (VOC's), (no solvents), | Typically no VOC's used. Diluents if used, crosslink into polymer network |
| Application/printing flexibility | Has capability to be applied by various printing processes such as flexo, gravure, rotoscreen, ink jet and other dispensing methods. |
| Printed adhesive pattern can be immediately laminated and cured in-line as a rapid continuous in-line processes. | UV adhesives can be immediately laminated and UV light cured as continuous operation. UV curing process can often be carried out at 500 to 800fpm. |
| The curing equipment has a low foot print and can be retrofitted to existing lamination lines. | Much lower space requirements compared to drying tunnels. UV light irradiators are available that are less than 12 inches wide. Power supplies also have low space requirements. |
| Rapid development of full cured properties. | Cationic systems reach full cured properties in hours. Fully cured properties reached in seconds with radical type system |
| Handling and storage ease. | Typically 1 part thermoset type system and storage stable, even when left on application equipment. |
| Not distort film | Temperature sensitive substrates can be used with commercially available systems. |
| | Low temperature curing with proper engineering controls. |
| As with all systems, there are some issues with UV curable adhesives that include: • Films are preferably corona pre-treated for best bonds. • Low adhesive viscosity is preferred for room temperature application if flexo printed, but heated application systems are available. • Some matching of the adhesive formulation to substrate type is sometimes desirable for optimum performance. • Film substrates must be at least partially UV light transparent for free radical type chemistries since the adhesive is cured through the film, although there are commercial processes based on UV cationic type chemistry where the adhesive is initiated just before the film is laminated. | |

For example, the adhesive systems are preferably formed or derived from radiation-curable (i.e., radiation-polymerizable) components. Such systems have the ability to change from a fluid phase to a highly cross-linked or polymerized solid phase by means of a chemical reaction initiated by a radiation energy source, such as ultraviolet ("UV") light or electron beam ("EB") or other ionizing radiation. Thus, the reactants of the radiation-curable adhesive systems are "cured" by forming new chemical bonds under the influence of radiation.

Radiation-curable adhesive systems or formulations that are cured by a free radical mechanism typically include: i) monomers (e.g., low-viscosity monomers or reactive "diluents") capable of polymerization by free radical mechanism, ii) oligomers/prepolymers (e.g., acrylates) capable of polymerization by free radical mechanism, and optionally iii) other additives, such as non-reactive plasticizing diluents. Radiation-curable adhesive systems that are cured by UV light also include one or more photoinitiators. Radiation-curable radical adhesive systems curable by electron beam (EB) radiation do not require a photoinitiator, and may therefore be free of photoinitiator. Together, these monomers and oligomers/prepolymers may be grouped as "reactants."

Reactive (meth)acrylate diluents include, but are not limited to, trimethylolpropane triacrylate, hexanediol diacrylate, 1,3-butylene glycol diacrylate, diethylene glycol diacrylate, 1,6-hexanediol diacrylate, neopentyl glycol diacrylate, polyethylene glycol 200 diacrylate, tetraethylene glycol diacrylate, triethylene glycol diacrylate, pentaerythritol tetraacrylate, tripropylene glycol diacrylate, ethoxylated bisphenol-A diacrylate, propylene glycol mono/dimethacrylate, trimethylolpropane diacrylate, di-trimethylolpropane tetraacrylate, triacrylate of tris(hydroxyethyl) isocyanurate, dipentaerythritol hydroxypentaacrylate, pentaerythritol triacrylate, ethoxylated trimethylolpropane triacrylate, triethylene glycol dimethacrylate, ethylene glycol dimethacrylate, tetraethylene glycol dimethacrylate, polyethylene glycol-200 dimethacrylate, 1,6-hexanediol dimethacrylate, neopentyl glycol dimethacrylate, polyethylene glycol-600 dimethacrylate, 1,3-butylene glycol dimethacrylate, ethoxylated bisphenol-A dimethacrylate, trimethylolpropane trimethacrylate, diethylene glycol dimethacrylate, 1,4-butanediol diacrylate, diethylene glycol dimethacrylate, pentaerythritol tetramethacrylate, glycerin dimethacrylate, trimethylolpropane dimethacrylate, pentaerythritol trimethacrylate, pentaerythritol dimethacrylate, pentaerythritol diacrylate, aminoplast (meth)acrylates, and acrylated oils such as linseed, soya, and castor oils. Other polymerizable compounds that can be used include (meth)acrylamides, maleimides, vinyl acetate, vinyl caprolactam, polythiols, vinyl ethers and the like. Monoacrylates such as cyclohexyl acrylate, isobornyl acrylate, lauryl acrylate and tetrahydrofurfuryl acrylate and the corresponding methacrylates are also operable as reactive diluents as well as (meth)acrylate oligomers such as epoxy acrylates, urethane acrylates, and polyester or polyether acrylates.

Useful oligomers/prepolymers include resins having acrylate functionality, such as epoxy acrylates, polyurethane acrylates, and polyester acrylates. Exemplary oligomers and prepolymers include (meth)acrylated epoxies, (meth)acrylated polyesters, (meth)acrylated urethanes/polyurethanes, (meth)acrylated polyethers, (meth)acrylated polybutadiene, aromatic acid (meth)acrylates, and (meth)acrylated acrylic oligomers and the like.

If the radiation-curable adhesive are cured by free radical mechanism and formulated for curing by exposure to UV-light, then the adhesive includes one or more photoinitiators. Photoinitiators for free radical curing are well known to those skilled in the art. Specific examples include, but are not limited to, the benzoin alkyl ethers, such as benzoin methyl ether, benzoin ethyl ether, benzoin isopropyl ether and benzoin isobutyl ether. Another class of photoinitiators are the dialkoxyacetophenones exemplified by 2,2-dimethoxy-2-phenylacetophenone, i.e., IRGACURE®651 (Ciba-Geigy) and 2,2-diethoxy-2-phenylacetophenone. Still another class of photoinitiators are the aldehyde and ketone carbonyl compounds having at least one aromatic nucleus attached directly to the carboxyl group. These photoinitiators include, but are not limited to benzophenone, acetophenone, o-methoxybenzophenone, acetonaphthalenequinone, methyl ethyl ketone, valerophenone, hexanophenone, alpha-phenyl-butyrophenone, p-morpholinopropiophenone, dibenzosuberone, 4-morpholinobenzophenone, 4'-morpholinodeoxybenzoin, p-diacetylbenzene, 4-aminobenzophenone, 4'-methoxyacetophenone, benzaldehyde, alpha-tetralone, 9-acetylphenanthrene, 2-acetylphenanthrene, 10-thioxanthenone, 3-acetylphenanthrene, 3-acetylindone, 9-fluorenone, 1-indanone, 1 ,3,5-triacetylbenzene, thioxanthen-9-one, xanthene-9-one, 7-H-benz[de]-anthracen-7-one, 1-naphthaldehyde, 4,4'-bis(dimethylamino)-benzophenone, fluorene-9-one, 1'-acetonaphthone, 2'-acetonaphthone, 2,3-butedione, acetonaphthene, benz[a]anthracene 7.12 diene, etc. Phosphines such as triphenylphosphine and tri-o-tolylphosphine are also operable herein as photoinitiators. The photoinitiators or mixtures thereof are usually added in an amount ranging from 0.01 to 5% by weight of the total composition.

Radiation-curable adhesive systems or formulations that are UV cured by cationic mechanism typically include: i) monomers, oliogomers and/or polymers that are capable of cationic polymerization such as but not limited to aliphatic and/or cycloaliphatic epoxides and/or vinyl ethers, many of which are known to one skilled in the art, ii) one or more cationic photoinitiators that are known to one skilled in the art as onium salts, and optionally iii) polyols (organic compounds that contain hydroxyl functionality that are capable of adding to protonated epoxide) and other additives, such as non-reactive plasticizing diluents. There are many epoxides and vinyl ethers that are suitable. but cycloaliphatic epoxides (containing at least one epoxide group) are preferred. Examples include but are not limited to epoxides sold under the CYRA-CURE® (Dow Chemical) or UVCURE™ (UCB Chemical) trade names. The cycloaliphatic epoxides with cationic photoinitiator(s) may be used alone or in combination with polyols at varying concentrations. Examples of polyols include polycaprolactone type polyols but other polyols may be used.

UV cationic onium type photoininitiators useful for UV curable cationic adhesives are well known by one skilled in the art. US Patent Nos. 4407759 and 4417061, both incorporated herein by reference in their entirety, are useful for describing onium type photoinitiators of which there are many types commercially available. Examples of commercially available onium type photoinitiators include but are not limited to SarCAT® CD-1012 and KI-85™ from Sartomer.

Another type of UV adhesive that has found utility are, but are not limited to, mixtures of free radical UV adhesives and cationic UV adhesives. They are sometimes called hybrid systems because they have components that have been previously described as useful in free radical UV adhesives, and components that have been previously described as useful in cationic UV adhesives. These hybrid adhesives cure by free radical and cationic mechanisms when exposed to light useful for inducing polymerization.

Any appropriate tamper evident envelope geometry, including any temperature sensitive tape, can be used in connection with the invention. Various container designs disclosed in U.S. Patent Nos. 4,712,729 (Craig), 5,205,649 (Fullerton), 5,352,041 (Fullerton), 5,631,068 (Smith), 5,635,917 (Todman), and 5,798,169 (Smith), all incorporated herein by reference in their entirety, are suitable for use in connection with the present invention.

Also, although not preferred, the tamper evident devices of either or both of U.S. Patent Nos. 6,264,033 (Kannabiran et al.) and 6,270,256 (Todman) can be used in connection with the present invention, and are both incorporated herein by reference in their entirety. U.S. Patent No. 6,264,033 discloses an article, such as a tamper evident container, including an indicator having a first layer including a thermochromic ink composition, and a second layer, disposed on the first layer, having a composition different from the ink composition of the first layer. The first and/or second layer can be in the form of a message, including a change in color, shape, or pattern, even if not numeric, alphabetic, or alphanumeric. The second layer can be a non-thermochromic ink. US Patent No. 6,270,256 discloses a saliva-evident tamper evident device.

The additional tamper evident devices can comprise a composition such as thermochromic ink; non-thermochromic ink; aqueous evident ink; mechanical evident ink; solvent evident ink; and/or deactivating agent.

The tamper evident container is preferably formed from a single strip of flexible thermoplastic sheet material. This sheet material can comprise any suitable material, preferably high density polyethylene, low density polyethylene, a blend of high density polyethylene and low density polyethylene, high density polyethylene with a filler, cellulose acetate, polyester, or polypropylene. The sheet material can be a monolayer film. However, those skilled in the art will understand that multilayer films can also be beneficially used in connection with tamper evident containers. An example is a film with a polymeric core or inner layer, and two outside layers of high density polyethylene. The sheet material is folded laterally along a fold line to form a first portion and a second portion. The sides of the resulting envelope are sealed together. The thermoplastic sheet material is preferably transparent, partially transparent or translucent, or a combination of opaque and transparent so as to make it easier to see evidence of tampering.

### Tamper Evident Containers

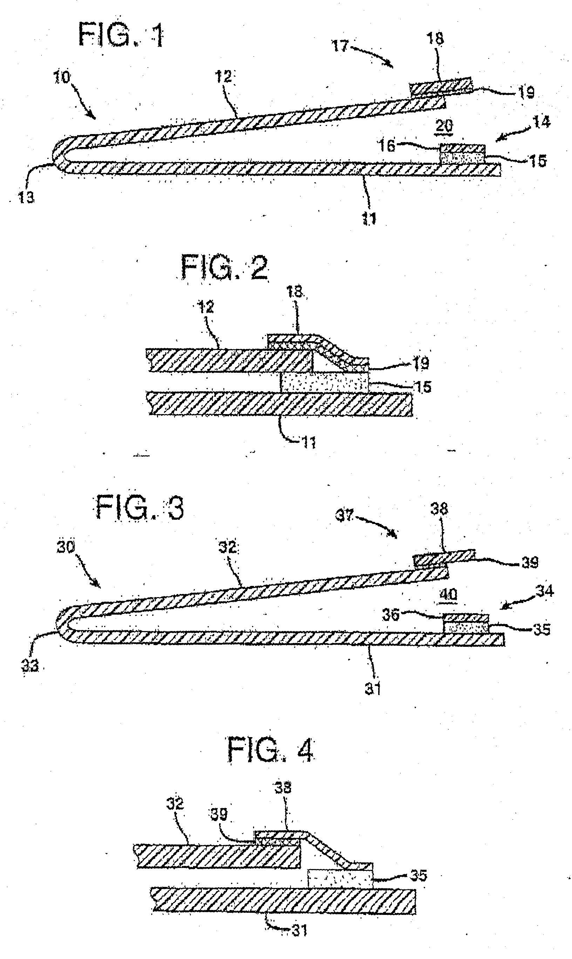

Figure 1 shows a schematic cross-section of a tamper evident container 10 in the form of a security envelope, the envelope in an open arrangement. Container 10 includes a first portion 11, which forms a primary wall of the container, and a second portion 12, which forms another primary wall of the container. First portion 11 can also be regarded on one embodiment as a back wall of a security envelope; second portion 12 can be regarded as a front wall of a security envelope. First and second portions 11 and 12 are joined at bottom fold 13. Adhesive strip 14, adhered by any suitable means to a leading section of first portion 11, includes an adhesive layer 15. The adhesive of layer 15 can be e.g. a pressure sensitive adhesive or any other suitable adhesive. A release liner 16, of any suitable composition, covers adhesive layer 15, and is peeled away prior to closure of the container.

Temperature sensitive tape 17 includes a substrate 18 which can comprise e.g. the frangible EAA material disclosed herein. A layer of radiation cured adhesive 19 adheres a portion of tape 17 to the leading edge of second portion 12.

Figure 2 shows an enlarged view of a part of Figure 1 in the area of the temperature sensitive tape and adhesive strip, with the envelope in a closed arrangement. A product such as a bank note will have been inserted through the opening 20 formed by the first and second portions 11 and 12 (see Figure 1). Release liner 16 has been peeled away from adhesive strip 14. The first and second portions have been brought together along their leading edges to bring a portion of temperature sensitive tape 17 into contact with the adhesive of adhesive layer 15, and the container is thus shown in the closed condition.

Figure 3 shows a schematic cross-section of a tamper evident container 30 in the form of a security envelope, the envelope in an open arrangement. Container 30 includes a first portion 31, which forms a primary wall of the container, and a second portion 32, which forms another primary wall of the container. First portion 31 can also be regarded on one embodiment as a back wall of a security envelope; second portion 32 can be regarded as a front wall of a security envelope. First and second portions 31 and 32 are joined at bottom fold 33. Adhesive strip 34, adhered by any suitable means to a leading section of first portion 31, includes an adhesive layer 35. The adhesive of layer 35 can be e.g. a pressure sensitive adhesive or any other suitable adhesive. A release liner 36, of any suitable composition, covers adhesive layer 35, and is peeled away prior to closure of the container.

Temperature sensitive tape 37 includes a substrate 38 which can comprise e.g. the frangible EAA material disclosed herein. A layer of radiation cured adhesive 39 adheres a portion of tape 37 to the leading edge of second portion 32.

Figure 4 shows an enlarged view of a part of Figure 3 in the area of the temperature sensitive tape and adhesive strip, with the envelope in a closed arrangement. A product such as a bank note will have been inserted through the opening 40 formed by the first and second portions 31 and 32 (see Figure 1). Release liner 36 has been peeled away from adhesive strip 34. The first and second portions have been brought together along their leading edges to bring a section of temperature sensitive tape 37 into contact with the adhesive of adhesive layer 35, and the container is thus shown in the closed condition.

With respect to Figures 1 to 4, it should be noted that:
- the thicknesses of the walls of the envelope, and the various layers of the adhesive strips 14 and 34, and temperature sensitive tapes 17 and 37,are highly exaggerated for most applications, and are depicted as presented for the sake of clarity;
- although radiation cured adhesive layer 19 is shown as extending the full width of the temperature sensitive tape 17, alternatively the radiation curable adhesive can be applied along a selected region of the temperature sensitive tape, in a continuous or discontinuous manner or pattern as desired, in either the longitudinal direction of the tape or with respect to the tape width - Figures 3 and 4 show such an alternative arrangement, where the radiation cured adhesive extends along only a portion of substrate 38, and thus the substrate 38 is in direct bonding relationship with adhesive layer 35;
- an advantage will be gained by having the adhesive layer 15 adhered to both a section of the temperature sensitive tape 17, and the leading section of second portion 12. The tape 17 will often be less robust in tensile strength or other physical properties than the envelope wall 12. If coins or other weighty articles are being packaged, then during transport the packaged products could move against the closure formed by the adhesion of adhesive layer 15 to temperature sensitive tape 17. By having a section of adhesive layer 15 adhered to the leading edge of the front wall 12, a more robust closure is formed that will better resist inadvertent and unintended package opening caused by a sudden load on the closure from the contained product; Figures 3 and 4 show a less desirable arrangement, but still within the scope of the invention, where adhesive layer 35 is adhered to substrate 38 of temperature sensitive tape 37, but not to a leading edge of second portion 32.

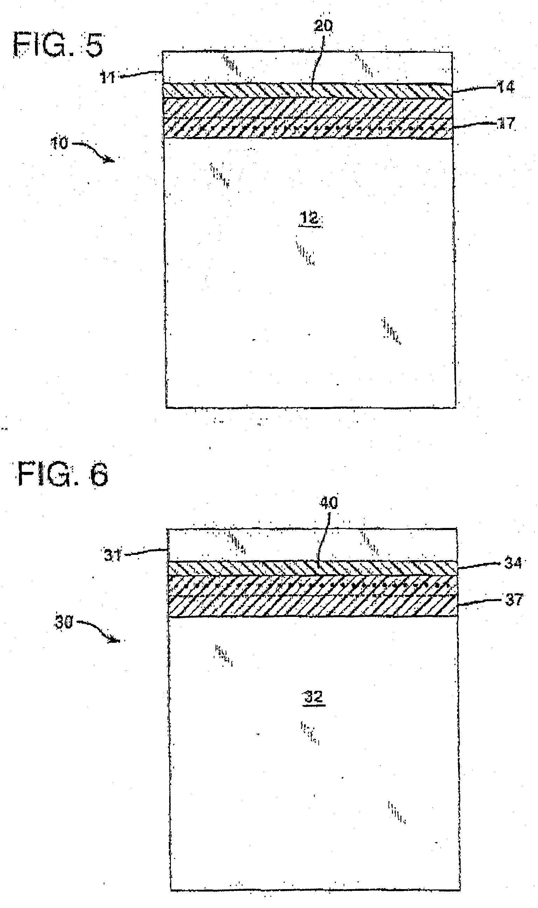

FIG. 5 is a plan view of the tamper evident container of Figure 1. An exposed section of adhesive strip 14 can be seen, the rest of the adhesive strip being hidden from view by the temperature sensitive tape 17. The horizontal dashed line shows the leading edge of second portion 12; the horizontal dotted line shows the edge of adhesive strip 14 furthest from the open end of the container.

FIG. 6 is a plan view of the tamper evident container of Figure 3. An exposed section of adhesive strip 34 can be seen, the rest of the adhesive strip being hidden from view by the temperature sensitive tape 37. The horizontal dashed line shows the leading edge of second portion 32; the horizontal dotted line shows the edge of adhesive strip 34 furthest from the open end of the container.

### Examples

A temperature sensitive, frangible EAA tape with a thickness of 60 microns, and another tape of the same composition, but with a thickness of 120 microns, were made, and were attached to polyethylene security bag samples with either of two UV curable adhesives.

One of the UV curable adhesives (E) was a cationic adhesive, and the other UV curable adhesive (F) was a free radical/cationic hybrid adhesive.

The security bag films as well as the frangible tape surface were corona treated before application of the adhesive. The surface energy of each surface was at least 38 dynes/cm² after corona treatment and before application of the UV curable adhesive.

UV curable adhesive was applied to one of the surfaces to be bonded, i.e. either a surface of the frangible tape, or a surface of the security bag film, and the two surfaces were brought in contact by passing under a 5 lb roller. The adhesive thickness was between 0.5 mils and 1.0 mils.

Each test sample, consisting of the two surfaces with UV curable adhesive between them, was then passed under a UV lamp at a speed of 50 feet/minute. A medium pressure mercury lamp (Type H) was the source of UV radiation. Two passes of each test sample under the lamp were made to ensure complete curing of the adhesive.

As a comparative, another test sample #3 was prepared in which the frangible tape was attached to the security bag sample with a conventional pressure sensitive hot melt adhesive instead of a UV curable adhesive.

The bond strength of the UV cured adhesive bond between the security bag film and the frangible tape was evaluated for each sample 10 minutes after curing, and is tabulated below in Table 1. In all cases, the adhesive bond was strong enough to provide complete failure of the frangible tape film, i.e. the adhesive bond was stronger than the cohesive strength of the frangible tape film.

Tamper evidence properties of the frangible tape such as ability to open the adhesive bond after Freon spray application or heat gun exposure were also evaluated. Test samples #1 and #2 with UV cured adhesives E (the cationic adhesive) and F (the free radical/cationic hybrid adhesive) did not show any tendency to delaminate when sprayed with freon coolant.

In contrast, Sample #3, bonded with a conventional hot melt pressure sensitive adhesive, became brittle and undesirably delaminated under the same conditions.

The frangible tape of Samples #1 and #2 also showed significant fracture when an attempt was made to open the adhesive bond after spraying with the Freon coolant.

Similar observations were made when heat was applied to the test samples. The frangible tape showed considerable distortion on heat exposure. In this case as well, the UV cured adhesive did not open or delaminate under heat.

**Table 2**

| Sample # | Frangible Tape Thickness (Inch) | Adhesive Thickness (Inch) | UV seal Quality (Ibs/in) | Tamper Evidence (Freon and Heat Exposure) |
|---|---|---|---|---|
| 1 E | 0.0024 | 0.0005 - 0.001 | Substrate Failure | Good |
| 1 F | 0.0024 | 0.0005 - 0.001 | Substrate Failure | Good |
| 2 E | 0.0048 | 0.0005 - 0.001 | Substrate Failure | Good |
| 2 F | 0.0048 | 0.0005 - 0.001 | Substrate Failure | Good |
| 3 | 0.0024 | 0.0005 - 0.001 | Substrate Failure | Poor |

"E" in Table 1 was a UV curable adhesive made up of 2.4 parts UVAcure 1500 (cycloaliphatic epoxide) and 1 part UVAcure 1531 (blend of cycloaliphatic epoxide and polyol) both from UCB Chemicals Corp., with 4%, by weight of the adhesive, of KI85 (50% sulfonium salts in propylene carbonate) photoinitiator from Sartomer.

"F" in Table 1 was a UV curable adhesive made up of a 50/50 blend by weight of:
- mixture 1
   UVAcure 1502 (cycloaliphatic epoxide from UCB Chemicals Corp), with 3%, by weight of mixture 1, of CD1012(iodonium cationic photoinitiator from Sartomer), and
- mixture 2
   Sartomer SR 495 (mixed acrylate esters), with 3%, by weight of mixture 2, of KT046 (from Sartomer).

Other radiation curable adhesives that cure by a free radical mechanism can be used in connection with the present invention, of which an example is listed in Table 3, but are not preferred.

**Table 3**

| Material Name | Supplier | Material type/function | parts |
|---|---|---|---|
| TMP-TA™ | UCB Chemicals Corp | free radical crosslinker | 46.4 |
| RICON™ 3801 | Sartomer | acrylated polybutadiene crosslinker | 46.2 |
| ODAB™ | First Chemical Corp. | Liquid amine synergist | 1.8 |
| IRGACURE® 819 | Ciba | Phosphine oxide type free-radical photoinitiator | 0.4 |
| LTX™ | First Chemical Corp. | liquid thioxanthone type free-radical photoinitiator | 0.92 |
| BD-1™ | First Chemical Corp. | Blend of free-radical photoinitiator | 2.78 |

The ratios and amounts of the components used in E and F can be varied by one skilled in the art.

Other cationic photoinitiators can be used as the "E" UV adhesive(e.g. CD1012).

Other free radical photoinitiators can be used as the "F" adhesive.

The adhesives are preferably storage stable when properly stored.

The adhesives preferably have viscosities that allow rapid and easy application at room temperature.

A tamper evident container of the invention can optionally include one or more additional features.

For example, the tamper evident container can include a layer, either integral with the temperature sensitive tape, or as a separate tape, having a thermochromic ink, non-thermochromic ink, aqueous evident ink, mechanical evident ink, solvent evident ink, and/or deactivating agent. A printed message can be included in or on the temperature sensitive tape. Any of these additional features can be disposed on or adjacent the temperature sensitive tape. These features are described with more particularity in US Patent Nos. 6,264,033 and 6,471,058 (Kannabiran et al.), both incorporated herein by reference in their entirety.

It is to be understood that variations of the present invention can be made without departing from the scope of the invention, which is not limited to the specific embodiments and examples disclosed herein, but extends to the claims presented below.

## Claims

1. A tamper evident container comprising:
a) a first portion;
b) an opening capable of providing access to the interior of the tamper evident container;
c) a second portion;
d) an adhesive strip adhered to the first or second portion; and
e) a temperature sensitive tape;
wherein at least one of the first portion, second portion, and temperature sensitive tape comprises a radiation cured adhesive; and
wherein the temperature sensitive tape is adhered to the first or second portion by means of the radiation cured adhesive.

2. The tamper evident container of claim 1 wherein the temperature sensitive tape comprises a material selected from the group consisting of ethylene/acrylic acid copolymer and ethylene/methacrylic acid copolymer.

3. The tamper evident container of claim 1 or 2 wherein the first or second portion to which the temperature sensitive tape is adhered, comprises a corona-treated surface.

4. The tamper evident container of claim 1, 2 or 3 wherein the radiation curable adhesive comprises a material selected from the group consisting of:
a) cationic radiation curable adhesive,
b) free radical radiation curable adhesive, and
c) free radical/cationic hybrid radiation curable adhesive.

5. A method of making a tamper evident container comprising:
a) providing a first portion, an opening capable of providing access to the interior of the tamper evident container, a second portion, an adhesive strip adhered to the first or second portion, and a temperature sensitive tape;
b) applying a radiation curable adhesive to at least one of the first portion, second portion, and temperature sensitive tape;
c) bringing the temperature sensitive tape in contact with the first or second portion; and
d) curing the radiation curable adhesive such that the temperature sensitive tape adheres, by means of the radiation curable adhesive, to at least one of the first and second portions.

6. The method of claim 5 wherein the temperature sensitive tape comprises a material selected from the group consisting of ethylene/acrylic acid copolymer and ethylene/methacrylic acid copolymer.

7. The method of claim 5 or 6 comprising, before applying the radiation curable adhesive to at least one of the first portion, second portion, and temperature sensitive tape, corona treating a surface of the first portion, second portion, or temperature sensitive tape to which the radiation curable adhesive is to be applied.

8. The method of claim 5, 6 or 7 wherein the radiation curable adhesive comprises a material selected from the group consisting of:
a) cationic radiation curable adhesive,
b) free radical radiation curable adhesive, and
c) free radical/cationic hybrid radiation curable adhesive.

9. The method at any one of claims 5 to 8 comprising coating the radiation curable adhesive onto the at least one of the first portion, second portion, and temperature sensitive tape.

10. The method at any one of claims 5 to 9 comprising printing the radiation curable adhesive onto the at least one of the first portion, second portion, and temperature sensitive tape.

11. The method at any one of claims 5 to 10 comprising applying ultraviolet radiation to the radiation curable adhesive to cure the radiation curable adhesive.

12. The method at any one of claims 5 to 10 comprising applying ionizing radiation to the radiation curable adhesive to cure the radiation curable adhesive.

13. The method at any one of claims 5 to 10 comprising applying electron beam radiation to the radiation curable adhesive to cure the radiation curable adhesive.
